# EUROPEAN PATENT APPLICATION

(11) **EP 4 574 539 A1**
(43) Date of publication of application: **25.06.2025**
(21) Application number: 24210750.6
(22) Date of filing: 05.11.2024
(51) Int. Cl.: B60L 53/12, B60L 53/57, B60L 55/00, H02J 50/10, H02J 50/12, H02J 50/40

(54) **WIRELESS POWER SUPPLY SYSTEM AND OPERATING METHOD FOR WIRELESS POWER SUPPLY SYSTEM**

(30) Priority: 06.12.2023 TW 112147533
(71) Applicant: APh ePower Co., Ltd., Kaohsiung City 821 (TW)
(72) Inventor: SU, Hsiu-Hsien, 821 Kaohsiung City (TW); TZENG, Yun-Chi, 821 Kaohsiung City (TW); LEE, Tsung-Shiun, 821 Kaohsiung City (TW)
(74) Representative: Becker, Eberhard

(57) **Abstract**

Disclosed are a wireless power supply system (100, 200) and an operating method (S100) for a wireless power supply system (100, 200). The wireless power supply system (100, 200) includes a charging device (110, 210) and a plurality of electric auxiliary vehicles (120_1 to 120_n, 220_1, 220_2). The charging device (110, 210) includes a device converter (111, 211) and a device induction coil (112, 212). A first electric auxiliary vehicle (120_1, 220_1) among the electric auxiliary vehicles (120_1 to 120_n, 220_1, 220_2) provides a wireless vehicle power (PC1) to the device induction coil (112, 212) in a first operating mode. The charging device (110, 210) provides the wireless vehicle power (PC1) to at least one electric auxiliary vehicle other than the first electric auxiliary vehicle (120_1, 220_1) in the first operating mode.

## Description

### BACKGROUND

### Technical Field

The disclosure relates to a power supply system and an operating method for a power supply system, and in particular to a wireless power supply system and an operating method for a wireless power supply system.

### Description of Related Art

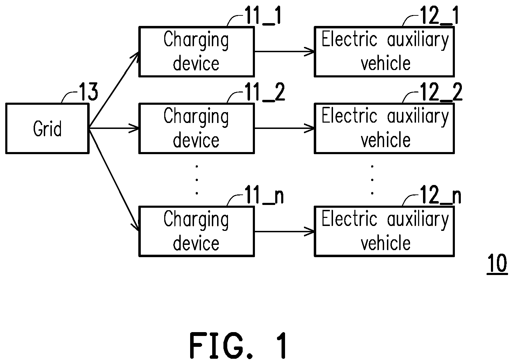

FIG. 1 is a schematic diagram of a current wireless power supply system. The wireless power supply system 10 includes multiple charging devices 11_1 to 11_n and multiple electric auxiliary vehicles 12_1 to 12_n. Each of the electric auxiliary vehicles 12_1 to 12_n may be an electric auxiliary transport vehicle. The electric auxiliary vehicles 12_1 to 12_n are, for example, electric auxiliary wheelchairs, electric auxiliary bicycles, electric auxiliary scooters, or electric motorcycles respectively. The wireless power supply system 10 utilizes the charging devices 11_1 to 11_n in a one-to-one manner to wirelessly charge the electric auxiliary vehicles 12_1 to 12_n. For example, the charging device 11_1 utilizes power from a grid 13 to wirelessly charge the electric auxiliary vehicle 12_1, and the charging device 11_2 utilizes power from the grid 13 to wirelessly charge the electric auxiliary vehicle 12_2, and so on.

It should be noted that, in order to supply power to the electric auxiliary vehicles 12_1 to 12_n, the charging devices 11_1 to 11_n must be disposed in the wireless power supply system 10. Thus, the construction of the wireless power supply system 10 costs more. Therefore, how to provide a wireless power supply system with a lower cost in terms of system construction is one of the focuses of research for those skilled in the art.

### SUMMARY

Disclosed are a wireless power supply system with a lower cost in terms of system construction and an operating method for a wireless power supply system.

A wireless power supply system of the disclosure includes a charging device and a plurality of electric auxiliary vehicles. The charging device includes a device converter and a device induction coil. The device induction coil is electrically connected to the device converter. A first electric auxiliary vehicle among the electric auxiliary vehicles provides a wireless vehicle power to the device induction coil in a first operating mode. The charging device provides the wireless vehicle power to at least one electric auxiliary vehicle other than the first electric auxiliary vehicle in the first operating mode.

An operating method of the disclosure is applicable to a wireless power supply system. The wireless power supply system includes a charging device and a plurality of electric auxiliary vehicles. The charging device includes a device converter and a device induction coil. The operating method includes the following steps. A wireless vehicle power is provided, by a first electric auxiliary vehicle among the electric auxiliary vehicles, to the device induction coil in a first operating mode. The wireless vehicle power is provided, by the charging device, to at least one electric auxiliary vehicle other than the first electric auxiliary vehicle in the first operating mode.

Based on the above, the wireless power supply system includes a single charging device. This way, the construction of the wireless power supply system costs less. In addition, in the first operating mode, the first electric auxiliary vehicle provides the wireless vehicle power to at least one electric auxiliary vehicle other than the first electric auxiliary vehicle. This way, the wireless power supply system provides an innovative method for wireless power supply.

### BRIEF DESCRIPTION OF THE DRAWINGS

FIG. 1 is a schematic diagram of a current wireless power supply system.
FIG. 2 is a schematic diagram of a wireless power supply system illustrated according to an embodiment of the disclosure.
FIG. 3 is a flowchart of an operating method illustrated according to an embodiment of the disclosure.
FIG. 4 is a circuit schematic diagram of a wireless power supply system illustrated according to an embodiment of the disclosure.

### DESCRIPTION OF THE EMBODIMENTS

Some embodiments of the disclosure will be described in detail below with reference to the drawings. For the reference numerals cited in the following description, when the same reference numerals appear in different drawings, the reference numerals will be regarded as referring to the same or similar elements. The embodiments are only a part of the disclosure and do not disclose all possible implementations of the disclosure. More specifically, the embodiments are merely examples in the claims of the disclosure.

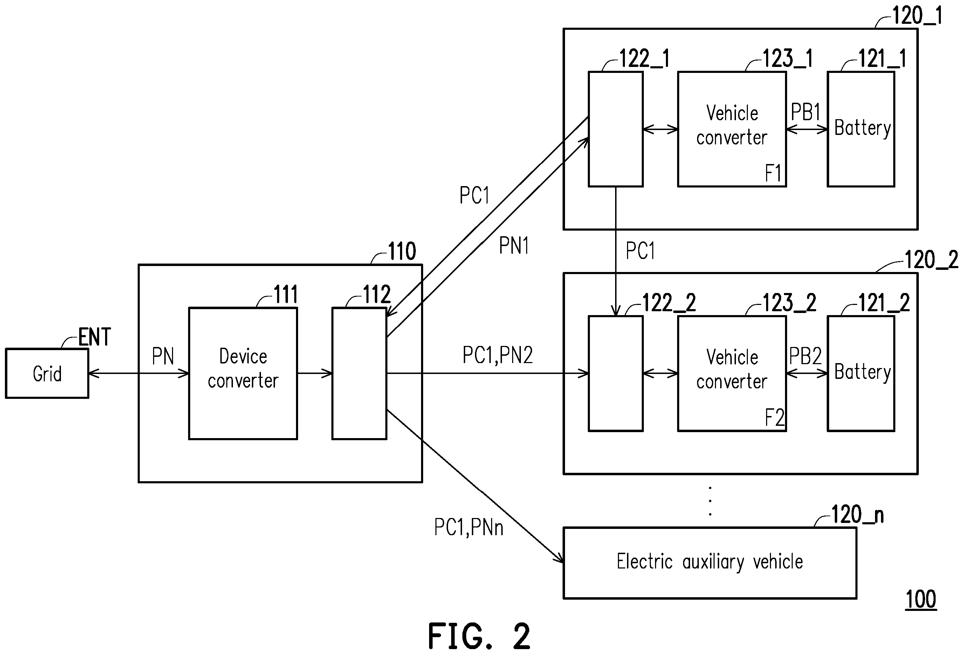

Please refer to FIG. 2, which is a schematic diagram of a wireless power supply system illustrated according to an embodiment of the disclosure. In this embodiment, a wireless power supply system 100 includes a charging device 110 and electric auxiliary vehicles 120_1 to 120_n. The wireless power supply system 100 wirelessly supplies power to at least one of the electric auxiliary vehicles 120_1 to 120_n. In this embodiment, the charging device 110 includes a device converter 111 and a device induction coil 112. The device induction coil 112 is electrically connected to the device converter 111.

In this embodiment, each of the electric auxiliary vehicles 120_1 to 120_n may be an electric auxiliary transport vehicle. The electric auxiliary vehicles 120_1 to 120_n are, for example, electric auxiliary wheelchairs, electric auxiliary bicycles, electric auxiliary scooters, or electric motorcycles respectively, but the disclosure is not limited thereto. In this embodiment, the wireless power supply system 100 provides different wireless power supply operations in different operating modes. For example, in a first operating mode, the electric auxiliary vehicle 120_1 provides a wireless vehicle power PC1 to the device induction coil 112. The charging device 110 provides the wireless vehicle power PC 1 to at least one of the electric auxiliary vehicles 120_2 to 120_n in the first operating mode.

It is worth mentioning that, in the first operating mode, the electric auxiliary vehicle 120_1 provides the wireless vehicle power PC1 to at least one of the electric auxiliary vehicles 120_2 to 120_n through the device induction coil 112. This way, the wireless power supply system 100 provides an innovative method for wireless power supply. In addition, the wireless power supply system 100 includes a single charging device 110. This way, the construction of the wireless power supply system 100 costs less.

In this embodiment, the electric auxiliary vehicle 120_1 includes a battery 121_1, a vehicle induction coil 122_1, and a vehicle converter 123_1. The battery 121_1 stores a battery power PB1. The vehicle converter 123_1 is electrically connected to the battery 121_1 and the vehicle induction coil 122_1. The electric auxiliary vehicle 120_2 includes a battery 121_2, a vehicle induction coil 122_2, and a vehicle converter 123_2. The battery 121_2 stores a battery power PB2. The vehicle converter 123_2 is electrically connected to the battery 121_2 and the vehicle induction coil 122_2.

In the first operating mode, the vehicle converter 123_1 converts the battery power PB1 to the wireless vehicle power PC1 and provides the wireless vehicle power PC1 to the vehicle induction coil 122_1. The vehicle induction coil 122_1 provides the wireless vehicle power PC1 to the device induction coil 112. In the first operating mode, the vehicle induction coil 122_2 receives the wireless vehicle power PC1 from the device induction coil 112. The vehicle converter 123_2 converts the wireless vehicle power PC1 to the battery power PB2 and stores the battery power PB2 in the battery 121_2.

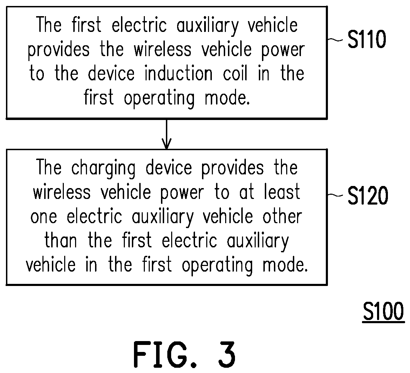

Please refer to FIGs. 2 and 3 at the same time. FIG. 3 is a flowchart of an operating method illustrated according to an embodiment of the disclosure. In this embodiment, an operating method S100 is applicable to the wireless power supply system 100. The operating method S100 shows the operations in the first operating mode. The operating method S100 includes Steps S110 and S120. In Step S110, the electric auxiliary vehicle 120_1 provides the wireless vehicle power PC1 to the device induction coil 112. In Step S120, the charging device 110 provides the wireless vehicle power PC1 to at least one of the electric auxiliary vehicles 120_2 to 120_n. The specific implementation methods of Steps S110 and S120 have been clearly described in the embodiment of FIG. 2 and will not be repeated here.

Referring back to the embodiment of FIG. 2, in a second operating mode, the electric auxiliary vehicle 120_1 may provide the wireless vehicle power PC1 to at least one of the electric auxiliary vehicles 120_2 to 120_n without the device induction coil 112.

For example, in the second operating mode, the vehicle converter 123_1 of the electric auxiliary vehicle 120_1 converts the battery power PB1 to the wireless vehicle power PC1 and provides the wireless vehicle power PC1 to the vehicle induction coil 122_1. In the second operating mode, the vehicle induction coil 122_2 of the electric auxiliary vehicle 120_2 receives the wireless vehicle power PC1 from the vehicle induction coil 122_1. The vehicle converter 123_2 converts the wireless vehicle power PC1 to the battery power PB2 and stores the battery power PB2 in the battery 121_2.

Taking the electric auxiliary vehicles 120_1 and 120_2 as examples, the electric auxiliary vehicles 120_1 and 120_2 may operate in correspondence with the first operating mode in a wireless charging field of the charging device 110. The electric auxiliary vehicles 120_1 and 120_2 may operate in correspondence with the second operating mode outside the wireless charging field of the charging device 110.

In a third operating mode, the charging device 110 wirelessly supplies power to the electric auxiliary vehicles 120_1 to 120_n.

For example, in the third operating mode, the device converter 111 converts a device power PN to wireless device powers PN1 to PNn, and provides the wireless device powers PN1 to PNn to the device induction coil 112. The device induction coil 112 transmits the wireless device powers PN1 to PNn. The vehicle induction coil 122_1 receives the wireless device power PN1. In the third operating mode, the vehicle converter 123_1 converts the wireless device power PN1 to the battery power PB1 and stores the battery power PB1 in the battery 121_1. The vehicle induction coil 122_2 receives the wireless device power PN2. The vehicle converter 123_2 converts the wireless device power PN2 to the battery power PB2 and stores the battery power PB2 in the battery 121_2.

For example, the vehicle converter 123_1 operates based on an operating frequency F1. The vehicle converter 123_2 operates based on an operating frequency F2. The operating frequency F1 is different from the operating frequency F2. The device converter 111 operates based on the operating frequency F1 during a first period and operates based on the operating frequency F2 during a second period. The first period and the second period may alternate with each other. It is worth mentioning that, during the first period, the charging device 110 may transmit the wireless device power PN1 based on the operating frequency F1 and use the wireless device power PN1 to charge the battery 121_1 of the electric auxiliary vehicle 120_1. During the second period, the charging device 110 may transmit the wireless device power PN2 based on the operating frequency F2 and use the wireless device power PN2 to charge the battery 121_2 of the electric auxiliary vehicle 120_2. Thus, the charging device 110 may selectively supply power to the electric auxiliary vehicles 120_1 and 120_2 in a time-sharing manner.

In some embodiments, the operating frequency F1 is the same as the operating frequency F2. Thus, the charging device 110 may supply power to the electric auxiliary vehicles 120_1 and 120_2 at the same time.

In some embodiments, charging voltages required to charge the batteries 121_1 and 121_2 may be different from the wireless device powers PN1 and PN2 and the device power PN. Thus, the electric auxiliary vehicle 120_1 may use a voltage regulation circuit to adjust a voltage value of the battery power PB1. The electric auxiliary vehicle 120_2 may use a voltage regulation circuit to adjust a voltage value of the battery power PB2. The charging device 110 may use a voltage regulation circuit to adjust a voltage value of the device power PN.

In this embodiment, the charging device 110 calculates a common-mode operating frequency of the operating frequencies F1 and F2. The device converter 111 operates based on the common-mode operating frequency to generate the wireless device powers PN1 and PN2. Thus, the charging device 110 may supply power to the electric auxiliary vehicles 120_1 and 120_2 at the same time.

In a fourth operating mode, at least one of the electric auxiliary vehicles 120_1 to 120_n may wirelessly supply power to the charging device 110.

Taking the electric auxiliary vehicle 120_1 for example, in the fourth operating mode, the vehicle converter 123_1 converts the battery power PB1 to the wireless vehicle power PC1 and provides the wireless vehicle power PC1 to the vehicle induction coil 122_1. The device induction coil 112 receives the wireless vehicle power PC1. In the fourth operating mode, the device converter 111 converts the wireless vehicle power PC1 to the device power PN and provides the device power PN to a grid ENT.

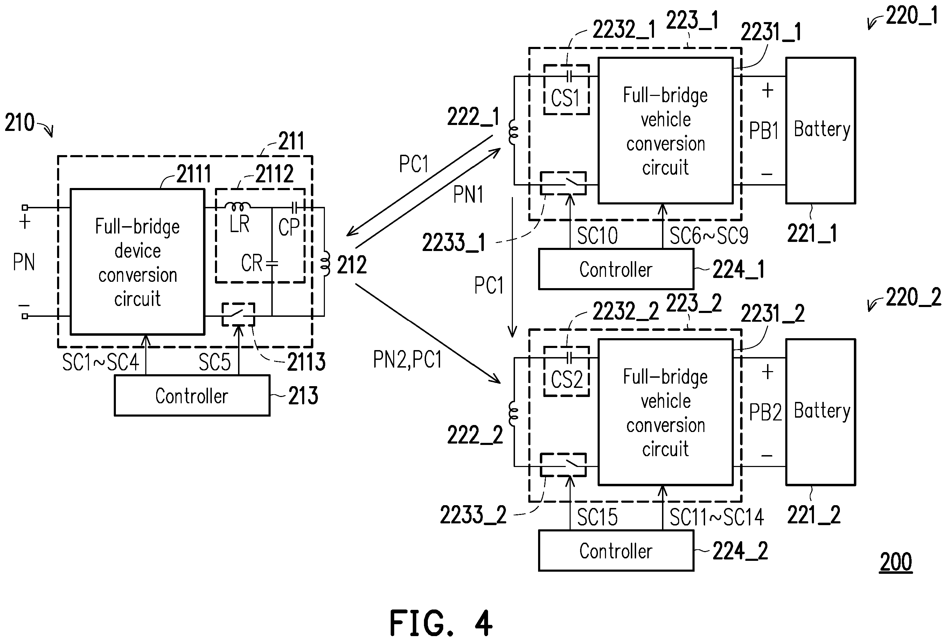

Please refer to FIG. 4, which is a circuit schematic diagram of a wireless power supply system illustrated according to an embodiment of the disclosure. In this embodiment, a wireless power supply system 200 includes a charging device 210 and electric auxiliary vehicles 220_1 and 220_2. The wireless power supply system 200 may be used for the power supply operations in the first operating mode, the second operating mode, the third operating mode, and the fourth operating mode as mentioned in FIG. 2. The power supply operations in the first operating mode, the second operating mode, the third operating mode, and the fourth operating mode have been clearly described in the embodiment of FIG. 2 and will not be repeated here.

In this embodiment, the charging device 210 includes a device converter 211, a device induction coil 212, and a controller 213. The device converter 211 includes a full-bridge device conversion circuit 2111, a device resonance circuit 2112, and a device switch 2113. The device resonance circuit 2112 is electrically connected between the device induction coil 212 and the full-bridge device conversion circuit 2111. A first end of the device switch 2113 is electrically connected to the device resonance circuit 2112. A second end of the device switch 2113 is electrically connected to the full-bridge device conversion circuit 2111. The switching operation of the device switch 2113 may determine the resonance operation of the device resonance circuit 2112. For example, when the device switch 2113 is turned on, the device resonance circuit 2112 performs a resonance operation on at least one wireless device power based on at least one operating frequency. When the device switch 2113 is turned off, the device resonance circuit 2112 stops the resonance operation.

Furthermore, the full-bridge device conversion circuit 2111 includes multiple power switches (not shown). The device resonance circuit 2112 includes an inductor LR and capacitors CP and CR. A first end of the inductor LR is electrically connected to a first end of the full-bridge device conversion circuit 2111. A first end of the capacitor CP is electrically connected to a second end of the inductor LR. A second end of the capacitor CP is electrically connected to a first end of the device induction coil 212. A first end of the capacitor CR is electrically connected to the second end of the inductor LR. A second end of the capacitor CR is electrically connected to a second end of the device induction coil 212. The first end of the device switch 2113 is electrically connected to the second end of the device induction coil 212 and the second end of the capacitor CR. The second end of the device switch 2113 is electrically connected to a second end of the full-bridge device conversion circuit 2111. An inductance value of the inductor LR, a capacitance value of the capacitor CP, and a capacitance value of the capacitor CR may determine an operating frequency of the device resonance circuit 2112.

In some embodiments, the inductor LR may be a variable inductor. At least one of the capacitors CP and CR may be a variable capacitor. Thus, the operating frequency of the device resonance circuit 2112 may be changed.

In this embodiment, the controller 213 is electrically connected to a control end of the power switches of the full-bridge device conversion circuit 2111 and a control end of the device switch 2113. The controller 213 may control the power switches of the full-bridge device conversion circuit 2111 as well as the device switch 2113 based on the first operating mode, the second operating mode, the third operating mode, and the fourth operating mode.

In this embodiment, the electric auxiliary vehicle 220_1 includes a battery 221_1, a vehicle induction coil 222_1, a vehicle converter 223_1, and a controller 224_1. The vehicle converter 223_1 includes a full-bridge vehicle conversion circuit 2231_1, a vehicle resonance circuit 2232_1, and a vehicle switch 2233_1. The full-bridge vehicle conversion circuit 2231_1 is electrically connected to the battery 221_1. The vehicle resonance circuit 2232_1 is electrically connected between a first end of the vehicle induction coil 222_1 and the full-bridge vehicle conversion circuit 2231_1. A first end of the vehicle switch 2233_1 is electrically connected to a second end of the vehicle induction coil 222_1. A second end of the vehicle switch 2233_1 is electrically connected to the full-bridge vehicle conversion circuit 2231_1.

Furthermore, the full-bridge vehicle conversion circuit 2231_1 includes multiple power switches (not shown). The vehicle resonance circuit 2232_1 includes a capacitor CS1. The capacitor CS1 is electrically connected between the first end of the vehicle induction coil 222_1 and a first end of the full-bridge vehicle conversion circuit 2231_1. The second end of the vehicle switch 2233_1 is electrically connected to a second end of the full-bridge vehicle conversion circuit 2231_1. A capacitance value of the capacitor CS1 may determine an operating frequency of the vehicle resonance circuit 2232_1.

In this embodiment, the controller 224_1 is electrically connected to a control end of the power switches of the full-bridge vehicle conversion circuit 2231_1 and a control end of the vehicle switch 2233_1. The controller 224_1 may control the power switches of the full-bridge vehicle conversion circuit 2231_1 as well as the vehicle switch 2233_1 based on the first operating mode, the second operating mode, the third operating mode, and the fourth operating mode.

In this embodiment, the electric auxiliary vehicle 220_2 includes a battery 221_2, a vehicle induction coil 222_2, a vehicle converter 223_2, and a controller 224_2. The vehicle converter 223_2 includes a full-bridge vehicle conversion circuit 2231_2, a vehicle resonance circuit 2232_2, and a vehicle switch 2233_2. The full-bridge vehicle conversion circuit 2231_2 is electrically connected to the battery 221_2. The vehicle resonance circuit 2232_2 is electrically connected between a first end of the vehicle induction coil 222_2 and the full-bridge vehicle conversion circuit 2231_2. A first end of the vehicle switch 2233_2 is electrically connected to a second end of the vehicle induction coil 222_2. A second end of the vehicle switch 2233_2 is electrically connected to the full-bridge vehicle conversion circuit 2231_2.

Furthermore, the full-bridge vehicle conversion circuit 2231_2 includes multiple power switches (not shown). The vehicle resonance circuit 2232_2 includes a capacitor CS2. The capacitor CS2 is electrically connected between the first end of the vehicle induction coil 222_2 and a first end of the full-bridge vehicle conversion circuit 2231_2. The second end of the vehicle switch 2233_2 is electrically connected to a second end of the full-bridge vehicle conversion circuit 2231_2. A capacitance value of the capacitor CS2 may determine an operating frequency of the vehicle resonance circuit 2232_2.

In this embodiment, the controller 224_2 is electrically connected to a control end of the power switches of the full-bridge vehicle conversion circuit 2231_2 and a control end of the vehicle switch 2233_2. The controller 224_2 may control the power switches of the full-bridge vehicle conversion circuit 2231_2 as well as the vehicle switch 2233_2 based on the first operating mode, the second operating mode, the third operating mode, and the fourth operating mode.

In the first operating mode, the controller 213 controls the full-bridge device conversion circuit 2111 so that the full-bridge device conversion circuit 2111 does not operate, and turns off the device switch 2113. In the first operating mode, the controller 224_1 uses control signals SC6 to SC9 to control the switching operations of the power switches of the full-bridge vehicle conversion circuit 2231_1, and uses a control signal SC10 to turn on the vehicle switch 2233_1. Thus, the vehicle converter 223_1 forms a resonant DC-AC power converter. The vehicle converter 223_1 converts the battery power PB1 to the wireless vehicle power PC1. The battery power PB1 is DC power. The wireless vehicle power PC1 is AC power. The vehicle induction coil 222_1 transmits the wireless vehicle power PC1 to the device induction coil 212. In the first operating mode, the vehicle induction coil 222_2 receives the wireless vehicle power PC1 from the device induction coil 212. The controller 224_2 uses control signals SC11 to SC14 to control the switching operations of the power switches of the full-bridge vehicle conversion circuit 2231_2, and uses a control signal SC15 to turn on the vehicle switch 2233_2. The battery power PB2 is DC power. Thus, the vehicle converter 223_2 forms a full-bridge rectifier. The vehicle converter 223_2 converts the wireless vehicle power PC1 to the battery power PB2.

In the second operating mode, the controller 213 controls the full-bridge device conversion circuit 2111 and the device switch 2113 so that the full-bridge device conversion circuit 2111 and the device switch 2113 do not operate. In the second operating mode, the controller 224_1 uses the control signals SC6 to SC9 to control the switching operations of the power switches of the full-bridge vehicle conversion circuit 2231_1, and uses the control signal SC10 to turn on the vehicle switch 2233_1. Thus, the vehicle converter 223_1 forms a resonant DC-AC power converter. The vehicle converter 223_1 converts the battery power PB1 to the wireless vehicle power PC1. The vehicle induction coil 222_1 transmits the wireless vehicle power PC1 to the device induction coil 212. In the second operating mode, the vehicle induction coil 222_2 receives the wireless vehicle power PC1 from the device induction coil 212. The controller 224_2 uses the control signals SC11 to SC14 to control the switching operations of the power switches of the full-bridge vehicle conversion circuit 2231_2, and uses the control signal SC15 to turn on the vehicle switch 2233_2. Thus, the vehicle converter 223_2 forms a full-bridge rectifier. The vehicle converter 223_2 converts the wireless vehicle power PC1 to the battery power PB2.

In the third operating mode, the controller 213 uses the control signals SC1 to SC4 to control the switching operations of the power switches of the full-bridge device conversion circuit 2111, and uses the control signal SC5 to turn on the device switch 2113. Thus, the device converter 211 forms a resonant DC-AC power converter. The device converter 211 converts the device power PN to at least one of the wireless device powers PN1 and PN2. The device power PN is DC power. The wireless device powers PN1 and PN2 are AC power.

In the third operating mode, the controller 224_1 uses the control signals SC6 to SC9 to control the switching operations of the power switches of the full-bridge vehicle conversion circuit 2231_1, and uses the control signal SC10 to turn on the vehicle switch 2233_1. Thus, the vehicle converter 223_1 forms a full-bridge rectifier. The vehicle converter 223_1 converts the wireless device power PN1 to the battery power PB1. The controller 224_2 uses the control signals SC11 to SC14 to control the switching operations of the power switches of the full-bridge vehicle conversion circuit 2231_2, and uses the control signal SC15 to turn on the vehicle switch 2233_2. Thus, the vehicle converter 223_2 forms a full-bridge rectifier. The vehicle converter 223_2 converts the wireless device power PN2 to the battery power PB2.

In the fourth operating mode, the controller 224_1 uses the control signals SC6 to SC9 to control the switching operations of the power switches of the full-bridge vehicle conversion circuit 2231_1, and uses the control signal SC10 to turn on the vehicle switch 2233_1. Thus, the vehicle converter 223_1 forms a resonant DC-AC power converter. The vehicle converter 223_1 converts the battery power PB1 to the wireless vehicle power PC1. In the fourth operating mode, the controller 224_2 uses the control signals SC11 to SC14 to control the switching operations of the power switches of the full-bridge vehicle conversion circuit 2231_2, and uses the control signal SC15 to turn on the vehicle switch 2233_2. Thus, the vehicle converter 223_2 forms a resonant DC-AC power converter. The vehicle converter 223_2 converts the battery power PB2 to a wireless vehicle power PC2.

In the fourth operating mode, the controller 213 uses the control signals SC1 to SC4 to control the switching operations of the power switches of the full-bridge device conversion circuit 2111, and uses the control signal SC5 to turn on the device switch 2113. Thus, the full-bridge device conversion circuit 2111 forms a full-bridge rectifier. The device converter 211 converts at least one of the wireless vehicle powers PC1 and PC2 to the device power PN.

In this embodiment, the controller 213 may receive feedback current values and feedback voltage values of the device power PN as well as the wireless device powers PN1 and PN2, and control the device power PN and the wireless device powers PN1 and PN2 according to the feedback current values and the feedback voltage values so as to meet the expected power specifications. The controller 224_1 may receive feedback current values and feedback voltage values of the battery power PB 1 and the wireless vehicle power PC 1, and control the battery power PB 1 and the wireless vehicle power PC 1 according to the feedback current values and the feedback voltage values so as to meet the expected power specifications. The controller 224_2 may receive feedback current values and feedback voltage values of the battery power PB2 and the wireless vehicle power PC2, and control the battery power PB2 and the wireless vehicle power PC2 according to the feedback current values and the feedback voltage values so as to meet the expected power specifications.

In summary, the wireless power supply system of the disclosure only requires a single charging device. This way, the construction of the wireless power supply system costs less. The wireless power supply system provides multiple methods for wireless power supply. It should be noted that, in the first operating mode, a first electric auxiliary vehicle provides the wireless vehicle power to at least one electric auxiliary vehicle other than the first electric auxiliary vehicle. This way, the wireless power supply system provides innovative methods for wireless power supply. In addition, during the first period, the charging device may transmit a first wireless device power based on a first operating frequency and use the first wireless device power to charge a battery of the first electric auxiliary vehicle. During the second period, the charging device may transmit a second wireless device power based on a second operating frequency and use the second wireless device power to charge a battery of a second electric auxiliary vehicle. This way, the charging device may selectively supply power to the electric auxiliary vehicles in a time-sharing manner.

Although the disclosure has been described with reference to the above embodiments, they are not intended to limit the disclosure. It will be apparent to one of ordinary skill in the art that modifications to the described embodiments may be made without departing from the spirit and the scope of the disclosure. Accordingly, the scope of the disclosure will be defined by the attached claims and their equivalents and not by the above detailed descriptions.

## Claims

1. A wireless power supply system (100, 200), comprising:
a charging device (110, 210), comprising:
a device converter (111, 211); and
a device induction coil (112, 212), electrically connected to the device converter (111, 211); and
a plurality of electric auxiliary vehicles (120_1 to 120_n, 220_1, 220_2), wherein a first electric auxiliary vehicle (120_1, 220_1) among the plurality of electric auxiliary vehicles (120_1 to 120_n, 220_1, 220_2) provides a wireless vehicle power (PC1) to the device induction coil (112, 212) in a first operating mode,
wherein the charging device (110, 210) provides the wireless vehicle power (PC1) to at least one electric auxiliary vehicle other than the first electric auxiliary vehicle (120_1, 220_1) in the first operating mode.

2. The wireless power supply system (100, 200) according to claim 1, wherein the first electric auxiliary vehicle (120_1, 220_1) comprises:
a first battery (121_1, 221_1), configured to store a first battery power (PB1);
a first vehicle induction coil (122_1, 222_1); and
a first vehicle converter (123_1, 223_1), electrically connected to the first battery (121_1, 221_1) and the first vehicle induction coil (122_1, 222_1), and configured to convert the first battery power (PB1) to the wireless vehicle power (PC1) in the first operating mode and provide the wireless vehicle power (PC1) to the first vehicle induction coil (122_1, 222_1),
wherein the first vehicle induction coil (122_1, 222_1) provides the wireless vehicle power (PC1) to the device induction coil (112, 212) in the first operating mode.

3. The wireless power supply system (100, 200) according to claim 2, wherein a second electric auxiliary vehicle (120_2, 220_2) among the plurality of electric auxiliary vehicles (120_1 to 120_n, 220_1, 220_2) comprises:
a second battery (121_2, 221_2);
a second vehicle induction coil (122_2, 222_2), configured to receive the wireless vehicle power (PC1) from the device induction coil (112, 212) in the first operating mode; and
a second vehicle converter (123_2, 223_2), electrically connected to the second battery (121_2, 221_2) and the second vehicle induction coil (122_2, 222_2), and configured to convert the wireless vehicle power (PC1) to a second battery power (PB2) in the first operating mode and store the second battery power (PB2) in the second battery (121_2, 221_2).

4. The wireless power supply system (100, 200) according to claim 3, wherein in a second operating mode:
the first vehicle converter (123_1, 223_1) converts the first battery power (PB1) to the wireless vehicle power (PC1) and provides the wireless vehicle power (PC1) to the first vehicle induction coil (122_1, 222_1),
the second vehicle induction coil (122_2, 222_2) receives the wireless vehicle power (PC1) from the first vehicle induction coil (122_1, 222_1), and
the second vehicle converter (123_2, 223_2) converts the wireless vehicle power (PC1) to the second battery power (PB2) and stores the second battery power (PB2) in the second battery (121_2, 221_2).

5. The wireless power supply system (100, 200) according to claim 3, wherein in a third operating mode:
the device converter (111, 211) converts a device power (PN) to a wireless device power (PN1 to PNn) and provides the wireless device power (PN1 to PNn) to the device induction coil (112, 212),
the device induction coil (112, 212) transmits the wireless device power (PN1 to PNn),
the first vehicle induction coil (122_1, 222_1) receives the wireless device power (PN1), and
the first vehicle converter (123_1, 223_1) converts the wireless device power (PN1) to the first battery power (PB1) and stores the first battery power (PB1) in the first battery (121_1, 221_1).

6. The wireless power supply system (100, 200) according to claim 5, wherein:
the first vehicle converter (123_1, 223_1) operates based on a first operating frequency (F1), and
the second vehicle converter (123_2, 223_2) operates based on a second operating frequency (F2).

7. The wireless power supply system according to claim 6, wherein during a first period, the device converter (111, 211) operates based on the first operating frequency (F1), and during a second period, the device converter (111, 211) operates based on the second operating frequency (F2).

8. The wireless power supply system (100, 200) according to claim 2, wherein in a fourth operating mode:
the first vehicle converter (123_1, 223_1) converts the first battery power (PB1) to the wireless vehicle power (PC1) and provides the wireless vehicle power (PC1) to the first vehicle induction coil (122_1, 222_1),
the device induction coil (112, 212) receives the wireless vehicle power (PC1), and
the device converter (111, 211) converts the wireless vehicle power (PC1) to a device power (PN) and provides the device power (PN) to a grid (ENT).

9. The wireless power supply system (200) according to claim 2, wherein the first vehicle converter (223_1) comprises:
a full-bridge vehicle conversion circuit (2231_1), electrically connected to the first battery (221_1);
a vehicle resonance circuit (2232_1), electrically connected between a first end of the first vehicle induction coil (222_1) and the full-bridge vehicle conversion circuit (2231_1); and
a vehicle switch (2233_1), wherein a first end of the vehicle switch (222_1) is electrically connected to a second end of the first vehicle induction coil (222_1), and a second end of the vehicle switch (2233_1) is electrically connected to the full-bridge vehicle conversion circuit (2231_1),
wherein when the vehicle switch (2233_1) is turned on, the vehicle resonance circuit (2232_1) performs a resonance operation on the wireless vehicle power (PC1) based on a first operating frequency (F1), and
when the vehicle switch (2233_1) is turned off, the vehicle resonance circuit (2232_1) stops the resonance operation.

10. The wireless power supply system (200) according to claim 1, wherein the device converter (211) comprises:
a full-bridge device conversion circuit (2111);
a device resonance circuit (2112), electrically connected between the device induction coil (212) and the full-bridge device conversion circuit (2111); and
a device switch (2113), wherein a first end of the device switch (2113) is electrically connected to the device resonance circuit (2112), and a second end of the device switch (2113) is electrically connected to the full-bridge device conversion circuit (2111),
wherein when the device switch (2113) is turned on, the device resonance circuit (2112) performs a resonance operation on at least one wireless device power (PN1 to PNn) based on at least one operating frequency (F1, F2), and
when the device switch (2113) is turned off, the device resonance circuit (2112) stops the resonance operation.

11. An operating method (S100) for a wireless power supply system (100, 200), wherein the wireless power supply system comprises a charging device (110, 210) and a plurality of electric auxiliary vehicles (120_1 to 120_n, 220_1, 220_2), and the charging device (110, 210) comprises a device converter (111, 211) and a device induction coil (112, 212), the operating method (S100) comprising:
providing, by a first electric auxiliary vehicle (120_1, 220_1) among the plurality of electric auxiliary vehicles (120_1 to 120_n, 220_1, 220_2), a wireless vehicle power (PC1) to the device induction coil (112, 212) in a first operating mode (S110); and
providing, by the charging device (110, 210), the wireless vehicle power (PC1) to at least one electric auxiliary vehicle other than the first electric auxiliary vehicle (120_1, 220_1) in the first operating mode (S120).

12. The operating method (S100) according to claim 11, wherein the first electric auxiliary vehicle (120_1, 220_1) comprises a first battery (121_1, 221_1), a first vehicle induction coil (122_1, 222_1), and a first vehicle converter (123_1, 223_1), wherein providing, by the first electric auxiliary vehicle (120_1, 220_1), the wireless vehicle power (PC1) to the device induction coil (112, 212) in the first operating mode comprises:
converting, by the first vehicle converter (123_1, 223_1), a first battery power (PB1) from the first battery (121_1, 221_1) to the wireless vehicle power (PC1) and providing the wireless vehicle power (PC1) to the first vehicle induction coil (122_1, 222_1); and
providing, by the first vehicle induction coil (122_1, 222_1), the wireless vehicle power (PC1) to the device induction coil (112, 212).

13. The operating method (S100) according to claim 12, wherein a second electric auxiliary vehicle (120_2, 220_2) among the plurality of electric auxiliary vehicles (120_1 to 120_n, 220_1, 220_2) comprises a second battery (121_2, 221_2), a second vehicle induction coil (122_2, 222_2), and a second vehicle converter (123_2, 223_2), wherein providing, by the charging device (110, 210), the wireless vehicle power (PC1) to the at least one electric auxiliary vehicle other than the first electric auxiliary vehicle (120_1, 220_1) in the first operating mode comprises:
converting, by the second vehicle converter (123_2, 223_2), the wireless vehicle power (PC1) to a second battery power (PB2) and storing the second battery power (PB2) in the second battery (121_2, 221_2).

14. The operating method (S100) according to claim 13, further comprising:
in a second operating mode:
converting, by the first vehicle converter (123_1, 223_1), the first battery power (PB1) to the wireless vehicle power (PC1) and providing the wireless vehicle power (PC1) to the first vehicle induction coil (122_2, 222_2);
receiving, by the second vehicle induction coil (122_2, 222_2), the wireless vehicle power (PC1) from the first vehicle induction coil (122_2, 222_2); and
converting, by the second vehicle converter (123_2, 223_2), the wireless vehicle power (PC1) to the second battery power (PB2) and storing the second battery power (PB2) in the second battery (121_2, 221_2).

15. The operating method (S100) according to claim 13, further comprising:
in a third operating mode:
converting, by the device converter (111, 211), a device power (PN) to a wireless device power (PN1 to PNn) and providing the wireless device power (PN1 to PNn) to the device induction coil (112, 212);
transmitting, by the device induction coil (112, 212), the wireless device power (PN1 to PNn);
receiving, by the first vehicle induction coil (122_2, 222_2), the wireless device power (PN1); and
converting, by the first vehicle converter (123_1, 223_1), the wireless device power (PN1) to the first battery power (PB1) and storing the first battery power (PB1) in the first battery (121_1, 221_1).
